## Europäisches Patentamt

## European Patent Office

## Office européen des brevets

(19)

(11) Veröffentlichungsnummer: **0 038 990**
**B1**

(12) # EUROPÄISCHE PATENTSCHRIFT

(45) Veröffentlichungstag der Patentschrift:
**20.11.86**

(51) Int. Cl.⁴: **F 24 J 3/00**, F 24 D 19/10

(21) Anmeldenummer: **81102818.2**

(22) Anmeldetag: **13.04.81**

(54) Verfahren zur Regelung einer Heizanlage mit einer Absorptions-Wärmepumpe.

(30) Priorität: **26.04.80 DE 3016251**

(43) Veröffentlichungstag der Anmeldung:
**04.11.81 Patentblatt 81/44**

(45) Bekanntmachung des Hinweises auf die Patenterteilung:
**20.11.86 Patentblatt 86/47**

(84) Benannte Vertragsstaaten:
**AT BE CH DE FR GB IT LI LU NL SE**

(56) Entgegenhaltungen:
**EP - A - 0 001 858**
**DE - A - 2 758 773**
**DE - A - 2 838 715**
**DE - A - 2 854 055**
**DE - A - 2 856 767**
**DE - B - 1 021 389**
**DE - C - 718 956**
**FR - A - 2 147 184**
**US - A - 2 272 871**
**US - A - 3 408 004**
**US - A - 5 582 838**

(73) Patentinhaber: **Buderus Aktiengesellschaft,**
**Sophienstrasse 32-34, D-6330 Wetzlar (DE)**

(72) Erfinder: **Heimbach, Paul, Tulpenweg 20,**
**D-5000 Köln 50 (DE)**

(74) Vertreter: **Benner, Alwin, Dipl.-Ing., Buderus**
**Aktiengesellschaft ZA-Patentabteilung Postfach 1220,**
**D-6330 Wetzlar (DE)**

ACTORUM AG

## Beschreibung

Die Erfindung betrifft ein Verfahren zur Regelung einer von Wärmepump- auf Direktheizbetrieb umschaltbaren Heizanlage mit einer Absorptions-Wärmepumpe, welche einen Lösungsmittelkreislauf mit Lösungsmittelpumpe, einen von einer Heizquelle beheiztem Austreiber, einen Rektifikator, einen Abscheider und Absorber, einen Verflüssiger und Verdampfer aufweist, und bei welcher über Wärmetauscher die Wärme an die Raumheizkörper eines Wärmeträgerkreislaufes übertragen wird sowie die Heizleistung der Heizanlage in Abhängigkeit der Aussenluft-Temperatur dem jeweiligen Wärmebedarf angepasst wird.

Eine derartige Heizanlage dient vorzugsweise zur Raum- und/oder Brauchwasserheizung von Ein- und Mehrfamilienhäusern. Sie wird bis zu einer bestimmten Aussen-Lufttemperatur als Wärmepumpe betrieben. Bei Aussen-Lufttemperaturen unter diesem Grenzwert wird die zum Beheizen des Austreibers beispielsweise in einem Brenner freigesetzte Heizenergie über einen Wärmeträger direkt an den Verbraucherkreislauf übertragen. Eine solche Heizanlage ist beispielsweise in der US-PS 2 272 871 beschrieben.

Die EP-A-0 001 858 beschreibt eine Absorptions-Wärmepumpe mit vergleichbarer Bauart. Bezüglich der Regelung der Heizleistung ist aber lediglich erwähnt, dass der Gasbrenner so eingestellt wird, dass die vom Raumsensor gemessene Temperatur einen im voraus eingestellten Sollwert beibehält. Dies ist die übliche Leistungsregelung bei Heizanlagen.

Im Hinblick auf sparsamen Energieeinsatz ist es notwendig, die Heizleistung dem jeweiligen Wärmebedarf anzupassen, und dies insbesondere beim Wärmepumpbetrieb, da die Absorptions-Heizanlage überwiegend im Wärmepumpbetrieb arbeitet.

Es ist ein Verfahren zur Regelung einer Absorptions-Heizanlage bekannt (Zeitschrift «Clima-Commerce-International» Nr. 1 (1980) S. 21–23), bei welchem die Vorlauftemperatur des Wärmeträgers und damit die Leistung der Heizanlage durch Änderung der umlaufenden Lösungsmittelmenge an den jeweiligen Bedarf angepasst wird. Dies geschieht entweder durch direkte Anpassung des Förderstroms der Lösungsmittelpumpe über die Änderung der Pumpendrehzahl bzw. der Frequenz des Antriebsmotors der Pumpe, oder indirekt durch Rückführung eines gesteuerten Teilstroms des Lösungsmittels von der Druck- zur Saugseite der Lösungsmittelpumpe.

Bei dem bekannten Verfahren wird die Lösungsmitteltemperatur hinter dem Austreiber auf hohem Niveau konstant gehalten in der Absicht, durch hohe Entgasungsbreiten vergleichsweise geringe spezifische Lösungsmittelumläufe zu erreichen. Unter Entgasungsbreite ist der Konzentrationsunterschied zwischen kältemittelarmem und kältemittelreichem Lösungsmittel zu verstehen, der umso höher ist, je stärker das Lösungsmittel im Austreiber erwärmt wird.

Die sich auf die Regelung einer Absorptionskälteanlage beziehende DE-C-718 956 erwähnt ebenfalls die Änderung der Förderleistung der Lösungspumpe (Seite 3, Zeilen 89 bis 99), um die Anlage der gewünschten Kälteleistung anzupassen.

Das vorstehend beschriebene Verfahren ist jedoch nachteilig, da infolge des grossen Temperaturgefälles von den heissen zu den kälteren Teilen der Heizanlage und zur Umgebung Wärmeverluste auftreten. Dadurch wird das Wärmeverhältnis vor allem im Teillastbereich des Wärmepumpebetriebs deutlich schlechter. Weiters bedeutet die Realisierung einer direkten Anpassung des Lösungsmittelstroms oder einer Bypass-Rückführung eines Teilstroms des Lösungsmittels einen relativ grossen Aufwand. Darüberhinaus muss mit Abnahme der Lösungsmittelmenge eine Verschlechterung des Wärmetausches im Absorber und im Wärmetauscher in Kauf genommen werden.

Der vorliegenden Erfindung liegt daher die Aufgabe zugrunde, diese Nachteile zu beheben und insbesondere ein Verfahren der eingangs genannten Art zu entwickeln, das sich durch eine Senkung des Energieverbrauchs auszeichnet.

Diese Aufgabe wird erfindungsgemäss durch die im Patentanspruch 1 angegebenen kennzeichnenden Merkmale gelöst.

Beim erfindungsgemässen Verfahren wird eine zeitlich konstante Lösungsmittelmenge durch die Lösungsmittelpumpe umgewälzt. Die Regelung der Heizleistung erfolgt durch eine Veränderung der Lösungsmitteltemperatur im Austreiber, und zwar wird dem Lösungsmittel keine zusätzliche Wärme zugeführt, solange der Ist-Wert der Heizleistung der Heizanlage grösser oder gleich dem Soll-Wert ist. Erst wenn der Ist-Wert kleiner als der Soll-Wert wird, wird die Lösungsmitteltemperatur erhöht.

Zumindest im Teillastbereich, d.h. wenn eine relativ hohe Aussenlufttemperatur eine geringe Heizleistung erfordert, ist die Lösungsmitteltemperatur niedriger als bei den bisherigen Verfahren. Das erfindungsgemässe Verfahren führt im Teillastbereich der Wärmepumpe durch die niedrigere Lösungsmitteltemperatur zu einer Verringerung der Wärmeverluste und zu einer Verkleinerung der Abgasverluste. Die zu fördernde Lösungsmittelmenge in diesem Betriebsbereich erfordert zwar – verglichen mit dem bisherigen Verfahren der variablen Lösungsmittelmenge – eine etwas höhere Antriebsleistung der Lösungsmittelpumpe, die erzielte Energieeinsparung durch das erfindungsgemässe Verfahren ist jedoch deutlich grösser. Es wird daher eine Verbesserung des Wärmeverhältnisses erzielt, die vor allem auch deswegen von Interesse ist weil sie sich auf die beim Heizbetrieb am häufigsten auftretenden Bedingungen bezieht. Neben dem geringen Aufwand zur Realisierung des Regelungsverfahrens ist als weiterer Vorteil noch die im zeitlichen Mittel erheblichen geringere thermische Belastung des Lösungsmittels zu nennen. Durch das niedrigere Temperaturniveau ist die Gefahr des Disoziierens erheblich reduziert und das Lösungsmittel bleibt länger verwendbar.

Bei einer Wärmepumpe ist ohnehin eine Heizquelle zum Beheizen des Austreibers vorhanden, so dass das Erhitzen des Lösungsmittels zweckmässigerweise durch diese Heizquelle erfolgt. Die Heizquelle ist beispielsweise ein Brenner, der entweder in einer oder mehreren Stufen oder kontinuierlich regelbar ist. Ein Mehrstufenbrenner oder kontinuierlich regelbarer Brenner erlaubt eine stärker differenzierte Regelung, da es möglich ist, in Abhängigkeit von der Grösse der Regelabweichung eine stärkere oder schwächere Leistungsstufe ein- oder auszuschalten.

Es erweist sich als günstig, wenn die Ist-Heizleistung mit der Soll-Heizleistung in einer Regeleinheit verglichen wird. Der Regeleinheit werden charakteristische Ist-Werte zugeleitet und dort mit vorgegebenen Soll-Werten verglichen. Wenn die Temperaturdifferenz zwischen Ist- und Soll-Wert grösser oder gleich Null ist, wird ein Steuerimpuls erzeugt, durch den die Heizquelle ausgeschaltet wird. Umgekehrt wird die Heizquelle bei Unterschreiten des Soll-Wertes durch einen weiteren Steuerimpuls eingeschaltet.

Der Regeleinheit werden die Werte der Aussen-Lufttemperatur und der Vorlauftemperatur des Wärmeträgers zugeleitet um diese bei der Anpassung der Lösungsmitteltemperatur bzw. der Brennerschaltung zu berücksichtigen.

Bei einer Weiterbildung des erfindungsgemässen Verfahrens wird die Absorptions-Heizanlage unterhalb einer vorgegebenen Temperatur von Wärmepump- auf Direktheizbetrieb umgeschaltet und die umgewälzte Lösungsmittelmenge beim Wärmepumpbetrieb so eingestellt, dass sie dem am Umschaltpunkt erforderlichen Volumensstrom entspricht.

Da die Regelung der Heizleistung im Wärmepumpbetrieb erfindungsgemäss durch Veränderung der Lösungsmitteltemperatur im Austreiber vorgenommen wird, ist die umgewälzte Lösungsmittelmenge zumindest innerhalb gewisser Grenzen frei wählbar. Sie wird daher so gewählt werden, dass sie dem am Umschaltpunkt erforderlichen Volumensstrom des Lösungsmittels im Direktheizbetrieb entspricht.

Es hat sich indessen auch als zweckmässig erwiesen, beim Umschalten auf Direktheizbetrieb die Lösungsmittelpumpe abzuschalten und die Vorlauftemperatur des Wärmeträgers über die Heizquelle zu regeln.

Die Erfindung und Einzelheiten der Erfindung werden anhand schematisch dargestellter Ausführungsbeispiele näher erläutert.

Hierbei zeigen:

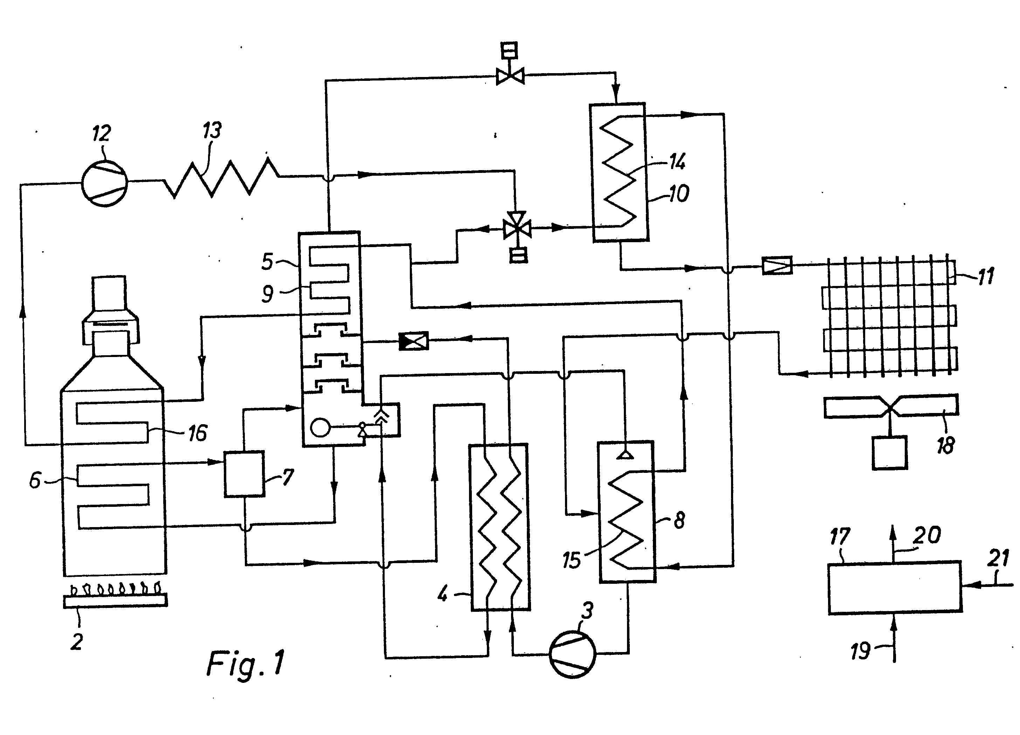

Fig. 1 ein Flussdiagramm einer Absorptions-Heizanlage,

Fig. 2 den Sollwert der Heizmittelvorlauftemperatur als Funktion der Aussen-Lufttemperatur,

Fig. 3 die Lösungstemperatur im Austreiber als Funktion der Aussen-Lufttemperatur.

Die Absorptions-Heizanlage enthält eine Wärmepumpe mit einem Lösungsmittelkreislauf und einem Kältemittelkreislauf. Kältemittelreiches Lösungsmittel, z.B. Wasser mit Ammoniak, wird von einer Lösungsmittelpumpe 3 umgewälzt. Das kältemittelreiche Lösungsmittel wird in einem Wärmetauscher 4 in Wärmetausch mit kältemittelarmem Lösungsmittel gebracht und erwärmt sich dabei. Anschliessend wird es über ein Rückschlagventil in einen Rektifikator 5 geleitet, in dem eine Zerlegung des kältemittelreichen Lösungsmittels in eine kältemittelreiche Flüssigkeit, die sich im Sumpf des Rektifikators 5 sammelt, und ein im wesentlichen das Kältemittel (z.B. Ammoniak) enthaltendes Gas, das sich am Kopf des Rektifikators 5 sammelt, stattfindet.

Die kältemittelreiche Flüssigkeit wird aus dem Sumpf entnommen und gelangt in einen Austreiber 6, der von einem Brenner 2 beheizt wird, wobei das leichter siedende Kältemittel aus dem Lösungsmittel verdampft. Das entstehende Flüssigkeits-Dampf-Gemisch wird in einen Abscheider 7 geleitet, in dem eine Phasentrennung durchgeführt wird. Das Gas wird in den unteren Teil des Rektifikators 5 eingeleitet, während das verbleibende kältemittelarme Lösungsmittel (Wasser) im Wärmetauscher 4 gegen kältemittelreiches Lösungsmittel abgekühlt und über einen Schwimmerregler, der in Abhängigkeit von der Standhöhe der Sumpfflüssigkeit im Rektifikator 5 den Leitungsquerschnitt für das Lösungsmittel öffnet und schliesst, in einen Absorber 8 eingesprüht wird.

Vom Kopf des Rektifikators 5 wird gasförmiges Kältemittel entnommen und über eine mit einem Magnetventil verschliessbare Leitung einem Verflüssiger 10 zugeführt, in dem das Kältemittel verflüssigt wird. Das Kältemittel wird dann auf Verdampfungsdruck entspannt und in einem Verdampfer 11 durch Zuführung von Wärme, beispielsweise aus der Umgebungsluft, die von einem Ventilator 18 angesaugt wird, verdampft. Das gasförmige Kältemittel wird anschliessend dem Absorber 8 zugeführt.

Im Absorber 8 wird das gasförmige Kältemittel durch das Lösungsmittel absorbiert. Das im Sumpf gebildete kältemittelreiche Lösungsmittel verlässt den Absorber 8 und wird der Lösungsmittelpumpe 3 zugeführt.

Der Lösungsmittelkreislauf der Wärmepumpe enthält als Komponenten Lösungsmittelpumpe 3, Wärmetauscher 4, Rektifikator 5, Austreiber 6, Abscheider 7 und Absorber 8, der Kältemittelkreislauf beginnt am Kopf des Rektifikators 5 und führt über Verflüssiger 10 und Verdampfer 11 zum Absorber 8.

Die Absorptions-Heizanlage umfasst ferner einen Wärmeträgerkreislauf, in dem ein Wärmeträger, z.B. Wasser, über eine Umwälzpumpe 12 einer Verbrauchergruppe 13, beispielsweise mehreren Raumheizkörpern, zugeführt wird. Der Wärmeträger gibt in der Verbrauchergruppe Wärme ab. Er gelangt anschliessend an ein Mehrwegenventil, das beim Wärmepumpbetrieb nur den Weg in die Rohrschlange 14 im Verflüssiger 10 freigibt. Dort wird der Wärmeträger erwärmt und dann weiter in die Rohrschlange 15 im Absorber 8 geführt, wo er sich durch Aufnahme der Absorptionswärme weiter erwärmt. Nachfolgend gelangt der Wärmeträger in einen Rücklaufkühler 9 im Kopf des Rektifikators und in einen Wärmetauscher 16, der im Rauchgasstrom des Wärmegenerators 1 angeordnet ist, wobei er sich jeweils weiter erwärmt, bevor er der Umwälzpumpe 12 wieder zugeführt wird.

Gemäss der Erfindung wird die Heizleistung der Heizanlage ausschliesslich durch Anpassung der Temperatur des Lösungsmittels im Austreiber 6 geregelt. Im gezeigten Beispiel bedeutet dies, dass die Heizleistung umso höher ist, je grösser die durch den Brenner 2 dem Austreiber 6 zugeführte Energie ist. Der Brenner 2 kann beispielsweise kontinuierlich regelbar oder in einer oder mehreren Stufen aus- und einschaltbar sein.

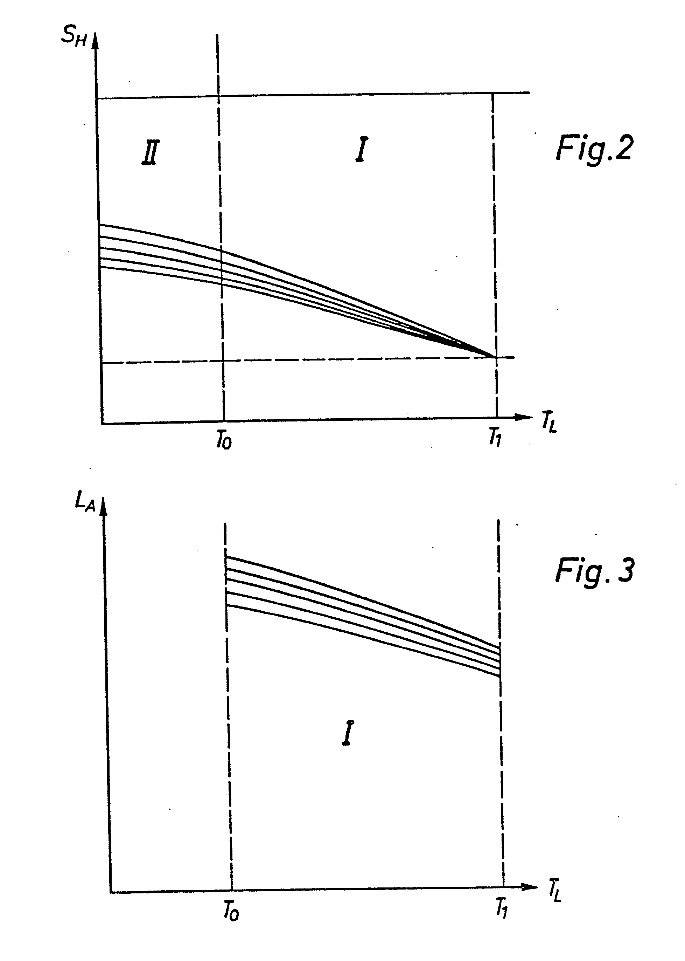

Unabhängig von der Art des Brenners 2 erfolgt seine Steuerung durch eine Regeleinheit 17. Der Regeleinheit 17 werden Signale veränderlicher Grössen zugeordnet, die charakteristisch für die erforderliche Heizleistung sind. Diese Signale sind durch Pfeil 19 symbolisiert. Beispielsweise werden als veränderliche Grössen die Aussen-Lufttemperatur und die Vorlauftemperatur des Wärmeträgers gewählt. Diese veränderlichen Ist-Werte werden in der Regeleinheit 17 mit vorgegebenen Soll-Werten verglichen. Die Soll-Werte sind nicht notwendigerweise Konstante, in Figur 2 sind z.B. mehrere Heizkurven für den Soll-Wert der Vorlauftemperatur des Heizmittels in Abhängigkeit von der Aussen-Lufttemperatur aufgetragen.

Jedesmal, wenn ein Ist-Wert von einem zugeordneten Soll-Wert nach oben oder nach unten abweicht, wird in der Regeleinheit 17 ein Schaltimpuls erzeugt. Die Schaltimpulse, die durch Pfeil 20 symbolisiert sind, steuern den Brenner 2. Die Regelungsvorgänge werden im folgenden für den einfachsten Fall eines Brenners 2 mit einer «Ein»- und einer «Aus»-Stellung beschrieben:

Der Ist-Wert der Heizmittel-Vorlauftemperatur sei zunächst grösser oder gleich dem Soll-Wert und der Brenner 2 ist demzufolge ausgeschaltet. Wenn nun der Ist-Wert unter den Soll-Wert absinkt, wird in der Regeleinheit 17 ein Schaltimpuls erzeugt, durch den der Brenner 2 eingeschaltet wird. Dadurch wird das kältemittelreiche Lösungsmittel im Austreiber erhitzt und das Verhältnis kältemittelarmes/kältemittelreiches Lösungsmittel vergrössert. Folglich findet im Absorber 8 vermehrt Absorption statt und es wird mehr Wärme an das Heizmittel übertragen, das sich dadurch erwärmt. Sobald der Ist-Wert den Soll-Wert erreicht hat, wird ein weiterer Schaltimpuls in der Regeleinheit 17 erzeugt, mit dem der Brenner 2 wieder ausgeschaltet wird. Pfeil 21 deutet die Energieversorgung der Regeleinheit 17 an.

Die Lösungsmittelpumpe 3 läuft unabhängig von der Stellung des Brenners 2 mit konstanter Drehzahl, d.h. die Menge des umgewälzten Lösungsmittels ist zeitlich konstant.

Wird eine vorgegebene Aussen-Lufttemperatur unterschritten, unterhalb der ein Wärmepumpbetrieb nicht mehr möglich ist, wird die dargestellte Absorptions-Heizanlage vom Wärmepump- auf Direktheizbetrieb umgeschaltet. Es ist unerlässlich, dass die beim Wärmepumpbetrieb konstant eingestellte Fördermenge der Lösungsmittelpumpe 3 dem am Umschaltpunkt erforderlichen Volumensstrom entspricht.

Als besonders zweckmässig hat sich erwiesen, dass beim Umschalten die Lösungsmittelpumpe 3 abgeschaltet und die Wärmeträgervorlauftemperatur in Abhängigkeit von der Sollwertabweichung in analoger Weise wie beim Wärmepumpbetrieb direkt über den Brenner 2 geregelt ist.

Wie in Figur 2 gezeigt ist, ist der Soll-Wert $S_H$ der Heizmittel-Vorlauftemperatur abhängig von der Aussen-Lufttemperatur $T_L$. In der Figur 2 sind beispielhaft fünf verschiedene Heizkurven aufgetragen, die an der Regeleinheit 17 vorgewählt werden können. Oberhalb einer Temperatur $T_1$, z.B. 21 °C, ist die Heizanlage ausgeschaltet. Sinkt die Aussen-Lufttemperatur auf Werte unter $T_1$ ab, beginnt die Heizanlage zu heizen, wobei der Ist-Wert der Heizmittelvorlauftemperatur mit dem oben beschriebenen Regelungsverfahren dem auf der vorgewählten Heizkurve liegenden, der herrschenden Aussen-Lufttemperatur entsprechenden Soll-Wert angepasst wird. Im Bereich I arbeitet die Heizanlage als Wärmepumpe. Unterhalb einer Temperatur $T_0$ wird die Heizanlage auf Direktheizbetrieb umgeschaltet (Bereich II). Die Heizkurven sind bei $T_0$ stetig.

In Figur 3 ist für den Bereich I der Heizanlage zwischen den Temperaturen $T_0$ und $T_1$ die Lösungsmitteltemperatur $L_A$ im Austreiber 6 als Funktion der Aussen-Lufttemperatur $T_L$ für die verschiedenen Soll-Werte der Heizmittelvorlauftemperatur aufgetragen. Jedem Soll-Wert der Heizmittelvorlauftemperatur entspricht ein eindeutig definierter Wert der Lösungsmitteltemperatur im Austreiber 6. Entsprechend der Heizkurvenschar der Figur 2 ergibt die Menge aller dieser Werte eine Kurvenschar entsprechend Figur 3. Voraussetzung für diesen Zusammenhang ist ein angenähert konstanter Forderstrom der Lösungsmittelpumpe 3.

**Patentansprüche**

1. Verfahren zur Regelung einer von Wärmepump- auf Direktheizbetrieb umschaltbaren Heizanlage mit einer Absorptionswärmepumpe, welche einen Lösungsmittelkreislauf mit Lösungsmittelpumpe 3, einen von einer Heizquelle beheizten Austreiber 6, einen Rektifikator 5, einen Abscheider 7, Absorber 8, Verflüssiger 10 und Verdampfer 11 aufweist, und bei welcher über Wärmetauscher (16, 9, 14, 15) die Wärme an die Raumheizkörper 13 eines Wärmeträgerkreislaufes übertragen wird, sowie die Heizleistung der Heizanlage in Abhängigkeit der Aussenluft-Temperatur dem jeweiligen Wärmebedarf angepasst wird dadurch gekennzeichnet, dass während des Wärmepumpbetriebes der Heizanlage

a) der von der Lösungsmittelpumpe 3 geförderte Volumenstrom des Lösungsmittels auch bei Veränderung des von der Aussenlufttemperatur $T_L$ abhängigen Soll-Wertes $S_H$ der Heizmittel-Vorlauftemperatur annähernd konstant gehalten wird, und

b) der Soll-Wert $S_H$ der Heizmittel-Vorlauftemperatur sowie die Lösungsmitteltemperatur $L_A$, mit welcher der Austreiber 6 betrieben wird, auf einen von der jeweiligen Aussenlufttemperatur $T_L$ abhängigen Wert einstellt, wird, wobei

c) dem Lösungsmittel erst dann zusätzliche Wärme zugeführt wird, wenn der Ist-Wert der Heizleistung der Heizanlage kleiner ist als der Soll-Wert $S_H$.

2. Verfahren nach Anspruch 1, dadurch gekennzeichnet, dass die Heizanlage unterhalb einer vorgegebenen Temperatur von Wärmepump- auf Direktheizbetrieb umgeschaltet und die umgewälzte Lösungsmittelmenge beim Wärmepumpbetrieb so eingestellt ist, dass sie dem am Umschaltpunkt erforderlichen Volumenstrom entspricht.

3. Verfahren nach Anspruch 2, dadurch gekennzeichnet, dass die Lösungsmittelpumpe 3 beim Umschalten von Wärmepump- auf Direktheizbetrieb abgeschaltet und die Vorlauftemperatur des Wärmeträgers durch Regelung der Heizquelle an ihren Soll-Wert angepasst wird.

## Claims

1. Method for controlling a heating plant being capable to be changed over from heat pump to direct heating operation and having an absorption heat pump provided with a solvent cycle with solvent pump 3, an expeller 6 being heated by a heat source, a rectifier 5, a separator 7, an absorber 8, a condenser 10, and a vaporizer 11, in said absorption heat pump, heat being transferred over heat exchangers (16, 9, 14, 15) to the room heating radiators 13 of a heat carrier cycle, and the heating energy of the heating plant being adapted, depending on the outside-air temperature, to the respective heat demand, characterized by that during the heat pump operation of the heating plant,

a) the volume flow of the solvent conveyed by solvent pump 3 is held nearly constant even with variations of the desired value $S_H$ of the initial heating agent temperature being dependent on the outside air temperature $T_L$, and

b) the desired value $S_H$ of the initial heating agent temperature as well as the solvent temperature $L_A$ used for expeller 6 are adjusted to a value being dependent on the respective outside air temperature, whereby

c) additional heat is fed into the solvent only when the actual value of the heating energy of the heating plant is smaller than desired value $S_H$.

2. Method according to claim 1, characterized by that, below a given temperature, the heating plant is switched over from heat pump to direct heating operation, and that, during heat pump operation, the circulated solvent amount is adjusted such that it corresponds to the required volume flow at the switch-over point.

3. Method according to claim 2, characterized by that, when switching over from heat pump to direct heating operation, solvent pump 3 is switched off, and that the initial temperature of the heat carrier is adapted to its desired value by regulation of the heat source.

## Revendications

1. Méthode pour la régulation d'une installation de chauffage réversible d'opération de thermopompe à opération de chauffage direct et ayant une thermopompe d'absorption, qui présente un cycle de solvant avec une pompe à solvant 3, un expulseur 6 chauffé par une source de chaleur, un rectificateur 5, un séparateur 7, absorbeur 8, condenseur 10 et évaporateur 11, et dans laquelle la chaleur est transmise sur des échangeurs de chaleur (16, 9, 14, 15) aux radiateurs du chauffage des locaux 13 et la puissance de chauffage de l'installation de chauffage est adaptée aux besoins en chaleur en fonction de la température de l'air extérieur, caractérisé en ce que, pendant l'opération de thermopompe de l'installation de chauffage,

a) le courant volumique du solvant convoyé de pompe à solvant est maintenu presque constant aussi en cas d'un changement de la valeur exigée $S_H$ de la température aller de l'agent de chauffage en fonction de la température de l'air extérieure, et que

b) la valeur exigée $S_H$ de la température aller de l'agent de chauffage et la température du solvant $L_A$, avec laquelle l'expulseur 6 est opéré, sont ajustés à une valeur en fonction de la température de l'air extérieure $T_L$ respective,

c) de chaleur additionnelle étant transmise au solvant seulement, si la valeur actuelle de la puissance de chauffage est inférieure à la valeur exigée $S_H$.

2. Méthode selon revendication 1, caractérisé en ce que l'installation de chauffage renverse au dessous d'une température prédéfinie d'opération de thermopompe à opération de chauffage direct, et que le débit de solvant circulé est ajusté en opération de thermopompe de telle manière, qu'il correspond au courant volumique nécessaire au point de renversement.

3. Méthode selon revendication 2, caractérisé en ce que la pompe à solvant 3 est déconnectée au renversement d'opération de thermopompe à opération de chauffage direct, et que la température aller du caloporteur est adaptée à sa valeur exigée par régulation de la source de chaleur.

Fig. 1

Fig.2

Fig.3